# EUROPÄISCHE PATENTSCHRIFT

(11) **EP 1 658 182 B1**
(45) Veröffentlichungstag und Bekanntmachung des Hinweises auf die Patenterteilung: **18.07.2007**
(21) Anmeldenummer: 04733822.3
(22) Anmeldetag: 19.05.2004
(51) Int. Cl.: B60C 23/04

(54) **EINRICHTUNG ZUM ÜBERWACHEN UND DRAHTLOSEN SIGNALISIEREN EINES DRUCKS ODER EINER DRUCKÄNDERUNG IN LUFTREIFEN AN FAHRZEUGEN**
DEVICE FOR MONITORING AND WIRELESSLY INDICATING A PRESSURE OR A PRESSURE CHANGE IN PNEUMATIC TIRES MOUNTED ON VEHICLES
DISPOSITIF DE SURVEILLANCE ET DE SIGNALISATION SANS FIL D'UNE PRESSION OU D'UNE VARIATION DE PRESSION DANS DES PNEUS DE VEHICULES

(30) Priorität: 20.05.2003 DE 10323631
(43) Veröffentlichungstag der Anmeldung: 24.05.2006
(73) Patentinhaber: Beru Aktiengesellschaft, 71636 Ludwigsburg (DE)
(72) Erfinder: SCHULZE, Gunter, 75228 Ispringen (DE); FRANK, Michael, 75015 Bretten (DE)
(74) Vertreter: Twelmeier Mommer & Partner
(86) Internationale Anmeldenummer: PCT/EP2004/005422
(87) Internationale Veröffentlichungsnummer: WO 2004/103740

(56) Entgegenhaltungen:
- EP-A- 0 016 991
- DE-A- 10 130 035
- US-B1- 6 218 937

## Beschreibung

Die Erfindung geht aus von einer Einrichtung mit den im Oberbegriff des Anspruchs 1 angegebenen Merkmalen.

Aus der ATZ Automobiltechnische Zeitschrift, 102. Jahrgang, Heft 11/2000, Seiten 950 bis 956, ist eine Einrichtung zum Überwachen und drahtlosen Signalisieren eines Druckes oder einer Druckänderung in Luftreifen von Fahrzeugen bekannt, bei welcher ein Drucksensor, ein Sender, ein Kontrollschaltkreis und eine Batterie in einem als "Radelektronik" bezeichneten Gerät zusammengefaßt sind, welches unter dem Reifen am Felgenbett des jeweiligen Rades des Fahrzeuges montiert wird. Die Radelektronik ist in ein Gehäuse eingebaut und darin vergossen, so dass die Batterie nicht zugänglich ist und nicht gewechselt werden kann.

Die Lebensdauer der Batterie begrenzt somit die Lebensdauer der am jeweiligen Rad montierten Radelektronik. Es ist deshalb wichtig, den Stromverbrauch so klein wie möglich zu halten, damit die Lebensdauer der Batterie und mit ihr die Lebensdauer der Radelektronik so groß wie möglich ist. Die Radelektronik wird deshalb nicht ständig betrieben, vielmehr finden die Druckmessungen nur in vorgegebenen Zeitabständen statt und die erhaltenen Druckmesswerte werden im Normalfall nicht jedesmal gesendet, sondern nur von Zeit zu Zeit, zum Beispiel einmal pro Minute. Zwischen den einzelnen Messvorgängen wird die Radelektronik in einen stromsparenden Zustand versetzt. Der Sendevorgang verbraucht kurzzeitig am meisten Energie. Er belastet die Batterie mit einem Stromimpuls, der zu einem inneren Spannungsabfall der Batterie führen kann. Im Extremfall kann die Spannung so weit absinken, dass der ordnungsgemäße Betrieb der von der Batterie versorgten elektronischen Schaltungen nicht mehr gewährleistet ist. Diese Gefahr besteht nicht nur, aber insbesondere bei einer gealterten Batterie: Auch wenn die Batterie das Ende ihrer Lebensdauer noch nicht erreicht hat, sondern noch eine Restladung enthält, kann es durch Alterung und durch eine damit einhergehende Passivierung zu einer Erhöhung des Innenwiderstandes der Batterie kommen. Auch Abkühlung erhöht den Innenwiderstand von Batterien; jeder Autofahrer weiß, dass eine Fahrzeugbatterie im Winter schwächer wird und insbesondere dann, wenn sie gealtert ist, bei Unterschreiten einer gewissen Temperatur ihre Aufgabe nicht mehr erfüllen kann.

Aus der US 6,218,937 B1 ist darüber hinaus eine Einrichtung mit den Merkmalen des Oberbegriffs des Anspruchs 1 bekannt, welche parallel zur Batterie einen Stützkondensator aufweist, welcher sicherstellen soll, dass der Sender ausreichend mit Strom versorgt wird. Durch einen solchen Stützkondensator wird jedoch die Lebensdauer der Batterie herabgesetzt.

Aus der DE 101 30 035 A1 ist eine Einrichtung bekannt, welche die Merkmale des Oberbegriffs des Anspruchs 1 mit Ausnahme eines Stützkondensators aufweist. Diese Einrichtung hat einen Steuerschalter, um die Erregung von Komponenten des Sendermoduls zu steuern. Dieser Steuerschalter besitzt eine Eingabe, die durch einen nicht weiter erläuterten und nicht dargestellten Filter und/oder durch einen Spannungsregulator mit der Batterie verbunden ist.

Der vorliegenden Erfindung liegt die Aufgabe zugrunde, einen Weg aufzuzeigen, wie den Einflüssen von Kälte und Alterung der Batterie in einer Radelektronik zum Trotz die Betriebssicherheit der Radelektronik erhöht und die Zeitspanne, in welcher ein sicherer Betrieb möglich ist, verlängert werden kann.

Diese Aufgabe wird gelöst durch eine Einrichtung mit den im Patentanspruch 1 angegebenen Merkmalen. Vorteilhafte Weiterbildungen der Erfindung sind Gegenstand der Unteransprüche.

Die erfindungsgemäße Einrichtung zum Überwachen und drahtlosen Signalisieren eines Druckes oder einer Druckänderung in Luftreifen an Fahrzeugen hat einen Drucksensor zum Messen des Drucks bzw. der Druckänderung, einen Sender zum Übertragen eines vom Meßsignal des Drucksensors abgeleiteten Signals, einen Kontrollschaltkreis, welcher den Sender lediglich von Zeit zu Zeit aktiviert, eine Batterie als Stromquelle, einen Stützkondensator und eine steuerbare Schalteinrichtung, mit welcher der Stützkondensator parallel zur Batterie geschaltet werden kann, wobei die steuerbare Schalteinrichtung einen Eingang für vom Kontrollschaltkreis kommende Steuersignale hat, durch welche der Stützkondensator nur von Zeit zu Zeit für eine begrenzte Zeitspanne zuschaltbar ist.

Das hat wesentliche Vorteile:
◆ Der erfindungsgemäße Einsatz eines Stützkondensators vermeidet Funktionsunterbrechungen der Radelektronik durch unvorhersehbaren, aber auch durch vorhersehbaren Anstieg des Innenwiderstandes der Batterie in der Radelektronik. Dass man die Spannung einer Batterie durch einen zu ihr parallel geschalteten Kondensator stützen kann, ist zwar an sich bekannt, eine ununterbrochene Stützung der Batteriespannung durch einen Kondensator wäre jedoch bei einer Einrichtung der vorliegenden Art kontraproduktiv und würde die Lebensdauer der Batterie bzw. die Zeitspanne, in welcher die Einrichtung ausreichend mit Strom versorgt wird, nicht verlängern, sondern sogar verkürzen, weil der Stützkondensator wegen seiner unvermeidlichen Leckströme zur Entladung der Batterie beitragen und damit das Problem verschärfen würde, zu dessen Lösung er dienen soll. Erfindungsgemäß wird dem jedoch dadurch begegnet, dass in Kombination mit dem Stützkondensator eine steuerbare Schalteinrichtung vorgesehen ist, mit welcher der Stützkondensator nur von Zeit zu Zeit für eine begrenzte Zeitspanne parallel zu der Batterie geschaltet werden kann, wobei die steuerbare Schalteinrichtung zu diesem Zweck vorzugsweise einen Eingang für vom Kontrollschaltkreis der Radelektronik kommende Steuersignale hat, durch welche der Stützkondensator nur von Zeit zur Zeit für eine begrenzte Zeitspanne zuschaltbar ist. Dadurch können die am Stützkondensator unvermeidlich auftretenden Leckströme auf eine so kurze Zeitspanne begrenzt werden, dass der sich aus der Stützung der Batteriespannung ergebende Vorteil den Nachteil einer zusätzlichen Entladung infolge des unvermeidlichen Leckstroms des Stützkondensators überwiegt, weil der Leckstrom nur kurzzeitig auftritt.
◆ Der Stützkondensator sorgt dafür, dass die Batteriespannung, die wegen Alterung, Kälte oder wegen häufiger Sendevorgänge beim Auftreten eines raschen Druckabfalls bei pulsförmiger Strombelastung unter ihren Grenzwert absinken könnte, bis zu welchem ein ordnungsgemäßes Funktionieren der Schaltungen noch gewährleistet ist, tatsächlich nicht unter diesen Grenzwert absinkt.
◆ Die Erfindung erlaubt nicht nur eine längere Lebensdauer der Batterie der Radelektronik, sondern erlaubt auch den Einsatz von Batterien, die wegen der bestimmungsgemäß pulsförmig auftretenden Strombelastung sonst ungeeignet für die Verwendung in einer Radelektronik wären.

Der Kontrollschaltkreis ist vorzugsweise so ausgelegt, dass er den Stützkondensator zuschaltet, kurz bevor er den Sender aktiviert, so dass der Stützkondensator noch die volle Spannung erreicht, welche die nur schwach belastete Batterie liefern kann. Der Stützkondensator sollte aber nicht unnötig lange aufgeladen bleiben, um das Abfließen von Ladung durch Leckstrom möglichst klein zu halten. Deshalb soll der Stützkondensator erst aufgeladen werden, kurz bevor ein pulsförmiger Strombedarf für einen Sendevorgang besteht. Mit Beendigung des Sendevorganges oder kurz danach, am besten mit Beendigung des Sendevorganges, soll der Stützkondensator wieder von der Batterie getrennt werden, damit er nicht unnötig früh aufgeladen wird.

Der Stützkondensator kann jedesmal zugeschaltet werden, kurz bevor der Kontrollschaltkreis den Sender aktiviert. Das ist jedoch nicht unter allen Umständen erforderlich, insbesondere dann nicht, wenn die Batterie noch nicht gealtert ist, wenn es nicht kalt ist und wenn die Batterie nicht in besonders kurzen Zeitabständen einen pulsförmigen Strombedarf befriedigen muß. In vorteilhafter Weiterbildung der Erfindung ist der Kontrollschaltkreis deshalb so ausgelegt, dass er den Stützkondensator nicht zu jeder Aktivierung des Senders zuschaltet, sondern nur bei Bedarf, den der Kontrollschaltkreis nach gewissen Kriterien ermitteln und feststellen kann. Dazu hat der Kontrollschaltkreis vorzugsweise eine Vergleichsschaltung, mit deren Hilfe festgestellt werden kann, ob Bedarf an einer Stützung der Batterie besteht.

Ein erstes Kriterium, welches herangezogen werden kann, um festzustellen, ob ein Bedarf zur Stützung der Batterie besteht, ist die Messung der Spannung der Batterie selbst. Zu diesem Zweck ist es vorteilhaft, wenn der Kontrollschaltkreis mit einer Einrichtung zum Messen der Spannung der Batterie verbunden und so ausgelegt ist, dass er den Bedarf feststellt, wenn die Spannung der Batterie einen Grenzwert unterschreitet. Dieser Grenzwert kann die Mindestspannung sein, welche die Schaltkreise in der Radelektronik benötigen, um einwandfrei funktionieren zu können. Diese Weiterbildung der Erfindung hat den Vorteil, dass sie unabhängig davon, warum die Batteriespannung abgefallen ist, ein Kriterium liefert, welches den Bedarf an einer Stützung der Batterie anzeigt.

Eine zweite Möglichkeit besteht darin, zu beobachten, ob bei einer oder mehreren vorausgegangenen Aktivierungen des Senders der Grenzwert der Spannung unterschritten wurde. Ist das der Fall, kann der Kontrollschaltkreis veranlassen, dass bei folgenden Sendevorgängen der Stützkondensator zugeschaltet wird. Diese Weiterbildung der Erfindung hat den Vorteil, dass sie nicht nur die Fälle erfasst, in denen die Spannung der unbelasteten Batterie einen Grenzwert unterschreitet, sondern auch die Fälle, in denen zwar die Spannung der unbelasteten Batterie hoch genug ist, bei der betriebsmäßigen pulsförmigen Strombelastung aber unter den Grenzwert abgesunken ist, so dass zu befürchten ist, dass das auch bei den folgenden Sendevorgängen der Fall sein wird.

Eine dritte Möglichkeit besteht darin, den Kontrollschaltkreis mit einem Temperatursensor zu verbinden und so auszulegen, dass er den Bedarf zur Stützung der Batterie feststellt, wenn die Temperatur einen Grenzwert unterschreitet, der nach Erfahrungswerten gewählt sein kann und erfahrungsgemäß erwarten läßt, dass die für den Sendebetrieb benötigte pulsförmige Strombelastung die Batteriespannung unter den Grenzwert absinken lassen würde, unter welchem eine ordnungsgemäße Arbeitsweise der Einrichtung nicht mehr gewährleistet ist.

Eine vierte Möglichkeit besteht darin, den Kontrollschaltkreis mit einem Zeitmesser zu verbinden und so auszulegen, dass er den Bedarf zur Stützung der Batterie feststellt, wenn eine vorgegebene Zeitspanne seit einem Start des Zeitmessers vergangen ist. Auf diese Weise kann man - vorzugsweise ergänzend zum Vorliegen sonstiger Kriterien - erreichen, dass dann, wenn die Batterie ein gewisses Alter erreicht hat, für die Sendevorgänge auf jeden Fall der Stützkondensator zugeschaltet wird. Der Zeitmesser wird zweckmäßigerweise dann gestartet, wenn die Einrichtung beim Anbau an ein Rad erstmals in Betrieb genommen wird.

Eine fünfte Möglichkeit besteht darin, den Kontrollschaltkreis mit einem Zähler zu verbinden, welcher die Anzahl der Sendevorgänge fortlaufend zählt, und den Kontrollschaltkreis so auszulegen, dass er den Bedarf nach Stützung der Batterie dann feststellt, wenn eine vorgegebene Anzahl von Sendevorgängen überschritten wurde. Das macht es möglich, unabhängig von sonstigen Kriterien oder ergänzend zum Vorliegen sonstiger Kriterien, den Stützkondensator zu den Sendevorgängen generell dann zuzuschalten, wenn die Batterie bereits die Energie für eine vorgegeben Anzahl von Sendevorgängen geliefert hat und der Ladezustand der Batterie an einem Punkt angekommen ist, bei welchem man nicht mehr sicher sein kann, dass bei der betriebsmäßigen pulsförmigen Strombelastung die Batteriespannung über dem für einen ordnungsgemäßen Betrieb der Einrichtung erforderlichen Mindestwert bleibt.

Eine sechste Möglichkeit besteht darin, den Kontrollschaltkreis so auszulegen, dass er den Bedarf zur Stützung der Batterie feststellt, wenn der gemessene Druck einen Grenzwert unterschreitet. Auf diese Weise läßt sich sicherstellen, dass unabhängig von sonstigen Kriterien oder ergänzend zum Vorliegen sonstiger Kriterien jedenfalls dann, wenn der gemessene Druck einen Grenzwert unterschreitet und damit eine Gefährdung signalisiert, die nächsten Sendevorgänge mit Sicherheit ablaufen können, was aus Sicherheitsgründen erwünscht ist.

Eine siebte Möglichkeit besteht darin, den Kontrollschaltkreis so auszulegen, dass er den Bedarf nach Stützung der Batterie dann feststellt, wenn die zeitliche Änderung des Drucks einen Grenzwert überschreitet. Das hat den Vorteil, dass bei einem schnellen Druckabfall, dessen Signalisierung besonders wichtig ist, unabhängig von sonstigen Kriterien, die den Innenwiderstand der Batterie beeinflussen können, sichergestellt wird, dass für die nächsten Sendevorgänge ausreichend Spannung zur Verfügung steht.

Eine achte Möglichkeit besteht darin, den Sender zu überwachen und eine vom Sender gewonnene Information im Kontrollschaltkreis mit dem Ziel auszuwerten, einen fehlgeschlagenen Sendeversuch zu diagnostizieren. Die Ursache für einen fehlgeschlagenen Sendeversuch kann eine zu große pulsförmige Strombelastung der Batterie sein. Wird ein fehlgeschlagener Sendeversuch festgestellt, kann für nachfolgende Sendevorgänge der Stützkondensator zugeschaltet werden. Ein fehlgeschlagener Sendeversuch kann zum Beispiel dadurch festgestellt werden, dass der Kontrollschaltkreis mit einem Spannungssensor kombiniert ist, welcher nach einer Aktivierung des Senders dessen Spannung überwacht und an den Kontrollschaltkreis meldet, so dass dieser, wenn die Spannung einen Grenzwert unterschreitet, vor der nächsten Aktivierung den Stützkondensator zuschaltet und die nächste Aktivierung vorzugsweise so schnell wie möglich bewirkt.

Die verschiedenen Möglichkeiten, die vorstehend geschildert wurden, können nicht nur einzeln, sondern auch in Kombination verwirklicht werden, was die Sicherheit der Reifendrucküberwachung wesentlich erhöht.

Grundsätzlich kann der Kontrollschaltkreis so ausgelegt werden, dass er das Kriterium oder die Kriterien, nach denen er den Bedarf nach einer Zuschaltung des Stützkondensators feststellt, vor jedem Sendevorgang erneut überprüft. Günstiger, stromsparender und rationeller kann es jedoch sein, wenn der Kontrollschaltkreis so ausgelegt ist, dass er nach einer Feststellung des Bedarfs auf Stützung der Batterie den Stützkondensator für eine bestimmte Anzahl von mehreren Sendevorgängen zuschaltet und erst danach das Kriterium oder die Kriterien, welches oder welche zur Feststellung des Bedarfs führten, erneut überprüft.

Vorzugsweise ist die steuerbare Schalteinrichtung mit einem Strombegrenzer kombiniert, über welchen der Stützkondensator geladen, aber nicht entladen wird. Dadurch kann sichergestellt werden, dass der Ladestrom des Stützkondensators nicht zu einer unerwünschten Verringerung der Betriebsspannung führt. Wenn dann jedoch der Sender aktiviert wird und der pulsförmige Strombedarf besteht, kann der Stützkondensator seine Ladung ohne Behinderung durch den Strombegrenzer abgeben, wie es gewünscht ist. Dafür eignet sich besonders eine Schalteinrichtung, welche zwei vom Kontrollschaltkreis gesteuerte Schaltelemente aufweist, von denen das erste den Stützkondensator über den Strombegrenzer zuschaltet und das zweite den Strombegrenzer überbrückt. Eine solche Schalteinrichtung kann in der Weise betrieben werden, dass in der Ladephase des Stützkondensators nur das erste Schaltelement niederohmig ist, das zweite Schaltelement aber hochohmig. Dadurch wird verhindert, dass die Batterie durch den Ladestrom zu stark belastet wird. Erst für die Endladephase, wenn der pulsförmige Strombedarf für den Sendebetrieb besteht, wird auch das zweite Schaltelement niederohmig geschaltet. Dadurch wird ein Spannungsabfall am Strombegrenzer verhindert.

Vorzugsweise arbeitet die Schalteinrichtung mit Feldeffekttransistoren, insbesondere mit einem oder mehreren MOSFETs als Schaltelement bzw. Schaltelemente, weil diese im hochohmigen Zustand einen vernachlässigbaren Leckstrom haben.

Im allgemeinen ist der Kontrollschaltkreis, welcher erfindungsgemäß die steuerbare Schalteinrichtung steuert, Bestandteil der Radelektronik, in welcher er auch die in der Radelektronik vorhandenen Sensoren und den Sender steuert. Es besteht jedoch auch die Möglichkeit, die in der jeweiligen Radelektronik vorgesehene steuerbare Schalteinrichtung von einem im Fahrzeug vorgesehenen zentralen Empfangs- und Steuergerät aus zu steuern, an welches die Radelektroniken ihre Signale per Funk übermitteln. So besteht die Möglichkeit, die Mess- und Sendevorgänge in der Radelektronik anstatt durch oder ergänzend zu einem in der Radelektronik vorgesehenen Steuerschaltkreis per Funk vom zentralen Empfangs- und Steuergerät auszulösen, indem von diesem entsprechende Abfrage - oder Steuersignale per Funk an die jeweilige Radelektronik übermittelt werden. Es liegt deshalb im Rahmen der Erfindung, dass sich der Kontrollschaltkreis, welcher die steuerbare Schalteinrichtung steuert, nicht in der Radelektronik befindet, sondern im zentralen Empfangs- und Steuergerät und seine Befehle per Funk an die Radelektroniken übermittelt. Ein Reifendruckkontrollsystem, in welchem die Radelektroniken von einem zentralen Empfangs- und Steuergerät aus per Funk gesteuert werden können, ist in der DE 199 39 936 A1 offenbart.

Ein Ausführungsbeispiel der Erfindung ist schematisch in den beigefügten Zeichnungen dargestellt und wird nachfolgend beschrieben.
- Figur 1: zeigt ein Blockschaltbild einer erfindungsgemäßen Einrichtung und
- Figur 2: zeigt einen Ausschnitt aus der Schaltungsanordnung in Figur 1, in welcher die Schalteinrichtung detailliert worden ist.

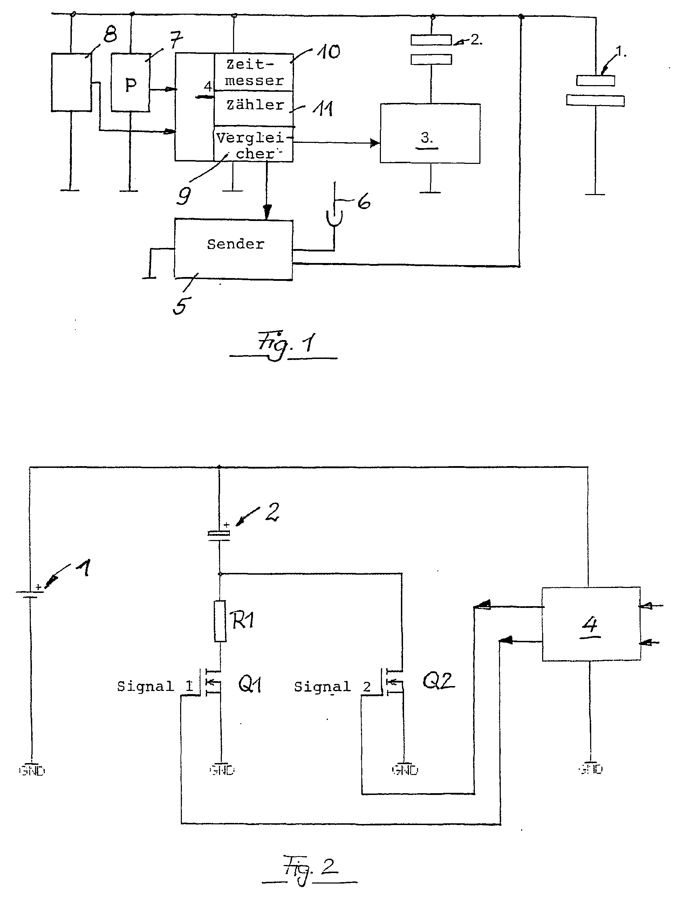

Figur 1 zeigt das Blockschaltbild einer Radelektronik mit einer Batterie 1, mit einem Stützkondensator 2, mit einer steuerbaren Schalteinrichtung 3, mit einem Kontrollschaltkreis 4, mit einem Sender 5 und einer Antenne 6. Außerdem enthält die Radelektronik einen Drucksensor 7, der ein elektrisches Ausgangssignal liefert, zum Beispiel einen piezo-elektrischen Drucksensor, und einen weiteren Sensor 8.

Die Batterie 1 liefert den Strom für die Sensoren 7 und 8, für den Kontrollschaltkreis 4 und für den Sender 5. Der Kontrollschaltkreis ist vorzugsweise ein integrierter Schaltkreis, zum Beispiel ein ASIC, in welchen die Sensoren 7 und 8 integriert sein können. Außerdem sind in den Kontrollschaltkreis 4 ein Vergleicher 9, ein Zeitmesser 10 und ein Zähler 11 integriert.

Mit einer vom Basistakt des Kontrollschaltkreises 4 oder von einem der Sensoren 7, 8 abgeleiteten Uhr bestimmt der Kontrollschaltkreis 4, in welchen Zeitabständen der Drucksensor 7 und der Sensor 8 aktiviert werden und in welchen Zeitabständen der Sender 5 aktiviert wird. Der Drucksensor 7 kann zum Beispiel alle 3 Sekunden aktiviert werden, der Sender 5 kann zum Beispiel einmal pro Minute aktiviert werden. Wenn der Kontrollschaltkreis 4, welcher die vom Drucksensor 7 gelieferten Druckmesswerte erhält und mit Hilfe des Vergleichers 9 bewertet, feststellt, dass der Druck einen vorgegebenen Grenzwert unterschreitet, oder wenn er feststellt, dass ein schneller Druckabfall auftritt, der dadurch ermittelt werden kann, dass die Druckänderung zwischen zwei aufeinanderfolgenden Druckmessungen einen Grenzwert überschreitet, dann kann der Kontrollschaltkreis 4 den Sender 5 auch häufiger aktivieren, zum Beispiel nach jeder einzelnen Druckmessung, um die schnelle und deshalb gefährliche Veränderung des Drucks an ein Empfangsgerät im Fahrzeug zu übermitteln, die Messung ausgewertet und dem Fahrer zur Kenntnis gebracht werden können.

Eine zuverlässige Reifendrucküberwachung setzt voraus, dass der Sender 5, welcher kurzzeitig die größte Strombelastung für die Batterie 1 darstellt, eine ausreichende Betriebsspannung erhält. Um das sicherzustellen, steuert der Kontrollschaltkreis 4 die Schalteinrichung 3 so, dass sie kurz vor der Aktivierung des Senders 5 in einen niederohmigen Zustand geschaltet wird, so dass der Stützkondensator 2 dann parallel zur Batterie 1 liegt und auf eine Spannung aufgeladen wird, welche im wesentlichen mit der Spannung der Batterie 1 im unbelasteten Zustand übereinstimmt. Wird dann der Sender 5 kurz darauf aktiviert, steht ihm nicht nur der Strom aus der Batterie 1 zur Verfügung, sondern auch der Entladestrom des Stützkondensators 2, wodurch die Strombelastung der Batterie 1 verringert und der Abfall der Batteriespannung auf ein unkritisches Maß begrenzt wird.

Hat der Sender 5 die zu übertragenden Daten übertragen, wird er vom Kontrollschaltkreis 4 abgeschaltet. Gleichzeitig wird die Schalteinrichtung 3 vom Kontrollschaltkreis 4 in ihren hochohmigen Zustand zurückversetzt, so dass der Stützkondensator 2 zunächst nicht wieder aufgeladen wird und damit auch kein Leckstrom am Stützkondensator 2 auftreten kann.

Der Stützkondensator 2 muß nicht vor jedem Sendevorgang zugeschaltet werden; das kann vielmehr nach Bedarf geschehen, zum Beispiel dadurch, dass der Kontrollschaltkreis 4 mit Hilfe des Vergleichers 9 die vom Drucksensor 7 gelieferten Druckmesswerte bewertet und die Schalteinrichtung 3 dann aufsteuert, wenn der Druck einen vorgegebenen Grenzwert unterschreitet oder wenn die Druckänderung zwischen zwei aufeinanderfolgenden Druckmessungen einen vorgegebenen Grenzwert überschreitet. Ein weiteres Kriterium für das Zuschalten des Stützkondensators 2 kann der weitere Sensor 8 liefern, bei welchem es sich um einen Temperatursensor handeln kann. Stellt der Kontrollschaltkreis 4 mit Hilfe seines Vergleichers 9 fest, dass die Temperatur unter einen Grenzwert abgefallen ist, zum Beispiel unter - 20°C liegt, kann der Kontrollschaltkreis 4 die steuerbare Schalteinrichtung 3 vor dem nächsten Sendevorgang aufsteuern, das heißt, in ihren niederohmigen Zustand schalten. Das kann auch für eine vorgegebene Anzahl von künftigen Sendevorgängen festgelegt werden.

Der Sensor 8 könnte auch ein Spannungssensor sein, welcher die Spannung der Batterie 1 mißt. In diesem Fall würde der Kontrollschaltkreis 4 den Stützkondensator 2 zuschalten, wenn er mit Hilfe seines Vergleichers 9 feststellt, dass die Batteriespannung einen vorgegebenen Grenzwert unterschreitet. Dabei kann der Kontrollschaltkreis 4 mit Hilfe seiner integrierten Uhr auch unterscheiden, ob die Spannung der unbelasteten Batterie 1 oder die Spannung der Batterie 1 im belasteten Fall, nämlich bei einem der vorhergehenden Sendevorgänge, gemessen wurde.

Schließlich kann der Kontrollschaltkreis 4 mittels eines integrierten Zeitmessers 10 die Betriebszeit der gesamten Schaltung und damit ein Maß für das Alter der Batterie 1 ermitteln und nach Überschreiten eines vorgegebenen Alters bei künftigen Sendevorgängen den Stützkondensator 2 zuschalten.

Eine weitere Möglichkeit besteht darin, dass der Kontrollschaltkreis 4 mittels eines integrierten Zählers 11 die Anzahl der Sendevorgänge zählt und nach Überschreiten einer vorgegebenen Anzahl von Sendevorgängen bei künftigen Sendevorgängen den Stützkondensator 2 zuschaltet.

Figur 2 zeigt ein Schaltungsbeispiel für die steuerbare Schalteinrichtung 3, welche in diesem Beispiel aus einem ersten MOSFET Q1, aus einem zweiten MOSFET Q2 und aus einem ohmschen Widerstand R1 besteht, welcher als Strombegrenzer wirkt. Der Widerstand R1 und der Stützkondensator 2 liegen in Reihe mit dem MOSFET Q1. Der MOSFET Q2 überbrückt den Widerstand R1 und den MOSFET Q1. Beide MOSFETs erhalten Steuersignale vom Kontrollschaltkreis 4. Wenn ein Sendevorgang aktiviert werden soll, erhält zunächst kurz vorher der MOSFET Q1 ein Signal 1 als Steuersignal, welches ihn vom hochohmigen Zustand in einen niederohmigen Zustand versetzt. Der Stützkondensator 2 wird dann von der Batterie 1 aufgeladen, wobei der Widerstand R1 als Strombegrenzer wirkt und sicherstellt, dass die Batteriespannung beim Ladevorgang nicht unerwünscht absinkt. Mit einem Signal 2, mit welchem der Kontrollschaltkreis 4 auch den Sender 5 aktiviert, wird dann der MOSFET Q2, der während des Aufladens des Stützkondensators 2 noch hochohmig war, in seinen niederohmigen Zustand umgeschaltet. Zur Versorgung des Senders 5 kann sich der Stützkondensator 2 rasch und ohne Behinderung durch einen Spannungsabfall am Widerstand R1 entladen und dadurch die Batteriespannung stützen. Nachdem der Sender 5 die gewünschten Daten übertragen hat, wird er vom Kontrollschaltkreis 4 wieder abgeschaltet. Gleichzeitig werden die beiden MOSFETs Q1 und Q2 in ihren hochohmigen Zustand zurückgeschaltet.

Das dargestellte Schaltungsbeispiel zeigt nur eines von verschiedenen Möglichkeiten, mit denen die vorliegende Erfindung in die Praxis umgesetzt werden kann.

### Bezugszahlenliste:

- 1.: Batterie
- 2.: Stützkondensator
- 3.: Schalteinrichtung
- 4.: Kontrollschaltkreis
- 5.: Sender
- 6.: Antenne
- 7.: Drucksensor
- 8.: Sensor
- 9.: Vergleicher
- 10.: Zeitmesser
- 11.: Zähler

## Patentansprüche

1. Einrichtung zum Überwachen und drahtlosen Signalisieren eines Drucks oder einer Druckänderung in Luftreifen an Fahrzeugen, welche
einen Drucksensor (7) zum Messen des Drucks bzw. der Druckänderung,
einen Sender (5) zum Übertragen eines vom Meßsignal des Drucksensors (7) abgeleiteten Signals,
einen Kontrollschaltkreis (4), welcher den Sender (5) lediglich von Zeit zu Zeit aktiviert,
als Stromquelle eine Batterie (1)
und einen parallel zur Batterie (1) geschalteten Stützkondensator (2) aufweist,
**dadurch gekennzeichnet, dass** eine steuerbare Schalteinrichtung (3) vorgesehen ist, mit welcher der Stützkondensator (2) nur von Zeit zu Zeit für eine begrenzte Zeitspanne parallel zur Batterie (1) geschaltet werden kann.

2. Einrichtung nach Anspruch 1, **dadurch gekennzeichnet, dass** die steuerbare Schalteinrichtung (3) einen Eingang für vom Kontrollschaltkreis (4) kommende Steuersignale hat, durch welche der Stützkondensator (2) nur von Zeit zu Zeit für eine begrenzte Zeitspanne zuschaltbar ist.

3. Einrichtung nach Anspruch 1 oder 2, **dadurch gekennzeichnet, dass** der Kontrollschaltkreis (3) so ausgelegt ist, dass er den Stützkondensator (2) zuschaltet, kurz bevor er den Sender (5) aktiviert.

4. Einrichtung nach Anspruch 3, **dadurch gekennzeichnet, dass** der Kontrollschaltkreis (4) so ausgelegt ist, dass er den Stützkondensator (2) jedesmal zuschaltet, kurz bevor er den Sender (5) aktiviert.

5. Einrichtung nach Anspruch 3, **dadurch gekennzeichnet, dass** der Kontrollschaltkreis (4) so ausgelegt ist, dass er den Stützkondensator (2) nicht zu jeder Aktivierung des Senders (5), sondern nur bei Bedarf zuschaltet.

6. Einrichtung nach Anspruch 5, **dadurch gekennzeichnet, dass** der Kontrollschaltkreis (4) einen Vergleicher (9) enthält.

7. Einrichtung nach Anspruch 6, **dadurch gekennzeichnet, dass** der Kontrollschaltkreis (4) mit einer Einrichtung zur Messung der Spannung der Batterie (1) verbunden und so ausgelegt ist, dass er den Bedarf feststellt, wenn die Spannung der Batterie (1) einen Grenzwert unterschreitet.

8. Einrichtung nach Anspruch 7, **dadurch gekennzeichnet, dass** der Kontrollschaltkreis (4) den Bedarf feststellt, wenn der Grenzwert der Spannung der Batterie (1) bei einer oder mehreren vorausgegangenen Aktivierungen des Senders (5) unterschritten wurde.

9. Einrichtung nach Anspruch 6, **dadurch gekennzeichnet, dass** der Kontrollschaltkreis (4) mit einem Sensor (8) verbunden und so ausgelegt ist, dass er den Bedarf feststellt, wenn der vom Sensor (8) gelieferte Messwert einen Grenzwert unterschreitet oder überschreitet.

10. Einrichtung nach Anspruch 9, **dadurch gekennzeichnet, dass** der Messwert die Temperatur ist.

11. Einrichtung nach Anspruch 6, **dadurch gekennzeichnet, dass** der Kontrollschaltkreis (4) mit einem Zeitmesser (10) verbunden und so ausgelegt ist, dass er den Bedarf feststellt, wenn eine vorgegebene Zeitspanne seit einem Start des Zeitmessers (10) vergangen ist.

12. Einrichtung nach Anspruch 6, **dadurch gekennzeichnet, dass** der Kontrollschaltkreis (4) mit einem Zähler (11) verbunden ist, welcher die Anzahl der Sendevorgänge fortlaufend zählt, und dass der Kontrollschaltkreis (4) so ausgelegt ist, dass er den Bedarf feststellt, wenn eine vorgegebene Anzahl von Sendevorgängen überschritten wurde.

13. Einrichtung nach Anspruch 6, **dadurch gekennzeichnet, dass** der Kontrollschaltkreis (4) so ausgelegt ist, dass er den Bedarf feststellt, wenn der gemessene Druck einen Grenzwert unterschreitet.

14. Einrichtung nach Anspruch 6, **dadurch gekennzeichnet, dass** der Kontrollschaltkreis (4) so ausgelegt ist, dass er den Bedarf feststellt, wenn die zeitliche Änderung des Drucks einen Grenzwert überschreitet.

15. Einrichtung nach Anspruch 5 oder 6, **dadurch gekennzeichnet, dass** der Sender (5) an den Kontrollschaltkreis (4) rückgekoppelt ist und dass der Kontrollschaltkreis (4) so ausgelegt ist, dass er ein vom Sender (5) durch die Rückkopplung übermitteltes Signal auf eine Information auswertet, welche einen fehlgeschlagenen Sendeversuch anzeigt, und dass der Kontrollschaltkreis (4) den Bedarf nach Zuschalten des Stützkondensators (2) feststellt, indem er den Fehlschlag eines Sendeversuches feststellt.

16. Einrichtung nach Anspruch 5 oder 6, **dadurch gekennzeichnet, dass** der Kontrollschaltkreis (4) so ausgelegt ist, dass er nach einer Feststellung des Bedarfs den Stützkondensator (2) für eine bestimmte Anzahl von Sendevorgängen zuschaltet und dann das Kriterium oder die Kriterien, welche zur Feststellung des Bedarfs führten, erneut überprüft.

17. Einrichtung nach einem der vorstehenden Ansprüche, **dadurch gekennzeichnet, dass** die Schalteinrichtung (4) einen Strombegrenzer (R1) aufweist, über welchen der Stützkondensator (2) geladen, aber nicht entladen wird.

18. Einrichtung nach Anspruch 17, **dadurch gekennzeichnet, dass** die Schalteinrichtung (3) zwei vom Kontrollschaltkreis (4) gesteuerte Schaltelemente (Q1, Q2) aufweist, von denen das erste (Q1) den Stützkondensator (2) über den Strombegrenzer (R1) zuschaltet und das zweite (Q2) den Strombegrenzer (R1) überbrückt.

19. Einrichtung nach einem der vorstehenden Ansprüche, **dadurch gekennzeichnet, dass** die Schalteinrichtung (3) als Schaltelement (Q1, Q2) einen Feldeffekttransistor aufweist, insbesondere einen MOSFET.

## Claims

1. Device for monitoring and wirelessly signaling a pressure, or a change in pressure, in pneumatic tires on vehicles having
a pressure sensor (7) for measuring the pressure or the change in pressure;
a transmitter (5) for transmitting a signal derived from the measuring signal of the pressure sensor (7);
a control circuit (4) that activates the transmitter (5) only from time to time;
a battery (1) as current source;
and a back-up capacitor (2) connected in parallel to the battery (1);
**characterized in that** a controllable switching unit (3) is provided by means of which the back-up capacitor (2) can be connected in parallel to the battery (1) from time to time for a limited period of time only.

2. The device as defined in Claim 1, **characterized in that** the controllable switching unit (3) has an input for control signals arriving from the control circuit (4) by which the back-up capacitor (2) can be brought into circuit from time to time for a limited period of time only.

3. The device as defined in Claim 1 or Claim 2, **characterized in that** the control circuit (4) is designed in such a way as to bring the back-up capacitor (2) into circuit shortly before it activates the transmitter (5).

4. The device as defined in Claim 3, **characterized in that** the control circuit (4) is designed in such a way that it will activate the back-up capacitor (2) every time shortly before it activates the transmitter (5).

5. The device as defined in Claim 3, **characterized in that** the control circuit (4) is designed in such a way that it will activate the back-up capacitor (2) not every time the transmitter (5) is activated, but only if and when necessary.

6. The device as defined in Claim 5, **characterized in that** the control circuit (4) comprises a comparator (9).

7. The device as defined in Claim 6, **characterized in that** the control circuit (4) is connected to a device for measuring the voltage of the battery (1) and is designed in such a way that it will determine that the need exists when the voltage of the battery (1) has dropped below a given limit value.

8. The device as defined in Claim 7, **characterized in that** the control circuit (4) determines that the need exists when the voltage of the battery (1) has been determined to be below its limit value in one or more preceding activations of the transmitter (5).

9. The device as defined in Claim 6, **characterized in that** the control circuit (4) is connected to a sensor (8) and is designed in such a way that it will determine that the need exists when the measured value supplied by the sensor (8) is below or above a given limit value.

10. The device as defined in Claim 9, **characterized in that** the measured value is the temperature.

11. The device as defined in Claim 6, **characterized in that** the control circuit (4) is connected to a timer (10) and is designed in such a way that it will determine that the need exists when a predetermined period of time has lapsed from the time the timer (10) has been started.

12. The device as defined in Claim 6, **characterized in that** the control circuit (4) is connected to a counter (11), which continuously counts the number of the transmitting operations, and that the control circuit (4) is designed in such a way that it will determine that the need exists when a predetermined number of transmitting operations has been exceeded.

13. The device as defined in Claim 6, **characterized in that** the control circuit (4) is designed in such a way that it will determine that the need exists when the pressure measured is determined to be below a given limit value.

14. The device as defined in Claim 6, **characterized in that** the control circuit (4) is designed in such a way that it will determine that the need exists when the variation in pressure over time exceeds a given limit value.

15. The device as defined in Claim 5 or Claim 6, **characterized in that** the transmitter (5) is coupled back to the control circuit (4) and that the control circuit (4) is designed in such a way that it evaluates a signal transmitted from the sensor (5) through the feedback system to determine any information indicating that an attempted transmission has failed and that the control circuit (4) determines that a need exists to bring the back-up capacitor (2) into circuit by determining that an attempted transmission has failed.

16. The device as defined in Claim 5 or Claim 6, **characterized in that** the control circuit (4) is designed in such a way that when a corresponding need has been determined to exist it will bring the back-up capacitor (2) into circuit for a given number of transmitting operations and will then once more check the criterion or criteria that led to the determination that a corresponding need exists.

17. The device as defined in any of the preceding claims, **characterized in that** the switching unit (4) comprises a current limiter (R1) through which the back-up capacitor (2) is charged, but not discharged.

18. The device as defined in Claim 17, **characterized in that** the switching unit (3) comprises two switching elements (Q1, Q2) controlled by the control circuit (4) the first (Q1) of which serves to cut in the back-up capacitor (2) via the current limiter (R1), while the second (Q2) serves to bridge the current limiter.

19. The device as defined in any of the preceding claims, **characterized in that** the switching unit (3) comprises as switching elements (Q1, Q2) a field effect transistor, especially a MOSFET.

## Revendications

1. Dispositif pour la surveillance et la signalisation sans fil d'une pression ou d'une modification de pression dans des bandages pneumatiques sur des véhicules automobiles, qui présente :
un capteur de pression (7) pour mesurer la pression respectivement la modification de pression ;
un émetteur (5) pour la transmission d'un signal qui dérive du signal de mesure du capteur de pression (7) ;
un circuit de commande (4) qui active l'émetteur (5) uniquement de temps en temps ;
à titre de source de courant, une batterie (1) ;
et un condensateur de support (2) monté en parallèle à la batterie (1) ;
**caractérisé en ce qu'**on prévoit un dispositif de commutation réglable (3) avec lequel le condensateur de support (2) peut être monté parallèlement à la batterie (1) uniquement de temps en temps pendant un laps de temps délimité.

2. Dispositif selon la revendication 1, **caractérisé en ce que** le dispositif de commutation réglable (3) possède une entrée pour les signaux de commande provenant du circuit de commande (4), par laquelle le condensateur de support (2) peut être connecté, uniquement de temps en temps pendant un laps de temps délimité.

3. Dispositif selon la revendication 1 ou 2, **caractérisé en ce que** le circuit de commande (3) est conçu de telle sorte qu'il met le condensateur de support (2) en circuit peu de temps avant d'activer l'émetteur (5).

4. Dispositif selon la revendication 3, **caractérisé en ce que** le circuit de commande (4) est conçu de telle sorte qu'il met chaque fois en circuit le condensateur de support (2) peu de temps avant d'activer l'émetteur (5) .

5. Dispositif selon la revendication 3, **caractérisé en ce que** le circuit de commande (4) est conçu de telle sorte qu'il met en circuit le condensateur de support (2), non pas à chaque activation de l'émetteur (5), mais uniquement à la demande.

6. Dispositif selon la revendication 5, **caractérisé en ce que** le circuit de commande (4) contient un comparateur (9).

7. Dispositif selon la revendication 6, **caractérisé en ce que** le circuit de commande (4) est relié à un dispositif pour la mesure de la tension de la batterie (1) et est conçu de telle sorte qu'il détermine la demande lorsque la tension de la batterie (1) dépasse vers le bas une valeur limite.

8. Dispositif selon la revendication 7, **caractérisé en ce que** le circuit de commande (4) détermine la demande lorsque la valeur limite de la tension de la batterie (1) a été dépassée vers le bas lors d'une ou de plusieurs activations précédentes de l'émetteur (5).

9. Dispositif selon la revendication 6, **caractérisé en ce que** le circuit de commande (4) est relié à un dispositif pour la mesure de la tension de la batterie (1) et est conçu de telle sorte qu'il détermine la demande lorsque la valeur de mesure fournie par le capteur (8) dépasse vers le haut ou dépasse vers le bas une valeur limite.

10. Dispositif selon la revendication 9, **caractérisé en ce que** la valeur de mesure est la température.

11. Dispositif selon la revendication 6, **caractérisé en ce que** le circuit de commande (4) est relié à un chronomètre (10) et est conçu de telle sorte qu'il détermine la demande lorsque un laps de temps prédéfini s'est déroulé depuis le démarrage du chronomètre (10).

12. Dispositif selon la revendication 6, **caractérisé en ce que** le circuit de commande (4) est relié à un compteur (11) qui compte en continu le nombre de processus d'émission, et **en ce que** le circuit de commande (4) est conçu de telle sorte qu'il détermine la demande lorsqu'un membre prédéfini des processus d'émission a été dépassé.

13. Dispositif selon la revendication 6, **caractérisé en ce que** le circuit de commande (4) est conçu de telle sorte qu'il détermine la demande lorsque la pression mesurée dépasse une valeur limite.

14. Dispositif selon la revendication 6, **caractérisé en ce que** le circuit de commande (4) est conçu de telle sorte qu'il détermine la demande lorsque la modification temporelle de la pression dépasse une valeur limite.

15. Dispositif selon la revendication 5 ou 6, **caractérisé en ce que** l'émetteur (5) est couplé par réaction au circuit de commande (4), et **en ce que** le circuit de commande (4) est conçu de telle sorte qu'il évalue un signal transmis par rétroaction via l'émetteur (5) en ce qui concerne une information qui indique une tentative d'émission ayant échoué, et **en ce que** le circuit de commande (4) détermine la demande après la mise en circuit du condensateur de support (2) en déterminant le raté d'une tentative d'émission.

16. Dispositif selon la revendication 5 ou 6, **caractérisé en ce que** le circuit de commande (4) est conçu de telle sorte qu'après la détermination de la demande, il met en circuit le condensateur de support (2) pendant un nombre déterminé de processus d'émission, avant de réévaluer le critère ou les critères qui ont donné lieu à une détermination de la demande.

17. Dispositif selon l'une quelconque des revendications précédentes, **caractérisé en ce que** le dispositif de commutation (4) présente un limiteur de courant par lequel le condensateur de support (2) est chargé, mais n'est pas déchargé.

18. Dispositif selon la revendication 17, **caractérisé en ce que** le dispositif de commutation (3) présente deux éléments de commutation (Q1, Q2) commandés par le circuit de commande (4), le premier élément de commutation (Q1) mettant en circuit le condensateur de support (2) via le limiteur de courant (R1) et le deuxième élément de commutation (Q2) établissant un pont électrique avec le limiteur de courant (R1).

19. Dispositif selon l'une quelconque des revendications précédentes, **caractérisé en ce que** le dispositif de commutation (3) présente, à titre d'éléments de commutation (Q1, Q2) un transistor à effet de champ, en particulier un MOSFET.
